# EUROPÄISCHE PATENTANMELDUNG

(11) **EP 2 462 799 A2**
(43) Veröffentlichungstag der Anmeldung: **13.06.2012**
(21) Anmeldenummer: 11009193.1
(22) Anmeldetag: 21.11.2011
(51) Int. Cl.: A01K 7/02

(54) **Beheizte Tränke**

(30) Priorität: 08.12.2010 DE 102010053761
(71) Anmelder: Kies & Kessler Horse Fence GmbH, 67435 Neustadt (DE)
(72) Erfinder: Keßler, Peter, 67435 Neustadt (DE)
(74) Vertreter: Wagner, Jutta

(57) **Zusammenfassung**

Die vorliegende Erfindung betrifft eine Tränke (1) mit einem Wasserbehälter (3), der durch Haltemittel (4) an einer Umfassung (2) festgelegt ist, wobei erfindungsgemäß unterhalb des Wasserbehälters (3) eine brennstoffbetriebene Wärmequelle (5) angeordnet ist und die Umfassung (2) zumindest eine im wesentlichen winddichte Wandung (8,9) mit einer verschließbaren Öffnung aufweist.

## Beschreibung

Die vorliegende Erfindung betrifft eine Tränke für Weidetiere.

Weidetiere, wie insbesondere Pferde, Rinder aber auch Schafe usw. werden vielfach ganzjährig auf der Weide gehalten. Üblicherweise wird den Tieren eine Tränke aufgestellt, aus der die Tiere zu jeder Zeit Wasser saufen können.

Im Winter ergibt sich das Problem, dass das Wasser einfrieren kann, wodurch nicht nur den Tieren kein Wasser zur Verfügung steht sondern auch die Tränke beschädigt bzw. zerstört werden kann. Da Wasser sich beim Gefrieren ausdehnt, besteht die Gefahr, dass das als Tränke dienende Gefäß beim Einfrieren des Wassers gesprengt wird.

Sofern ein Stromanschluss zur Verfügung steht, können Tränken mit Temperaturwächtern versehen und im Bedarfsfall beheizt werden. Auch eine Beheizung mittels Batterie wäre denkbar. Jedoch sind ausreichend leistungsfähige Batterien vergleichsweise teuer, bei niedrigen Temperaturen verringert sich die Leistungsfähigkeit, aber vor allem haben sie ein hohes Gewicht. Weiden ohne Stromanschluss finden sich gerade auch an unzugänglichen Orten, so dass ein hohes Gewicht nachteilig ist, weil man in regelmäßigen Abständen schwere Batterien zur Weide tragen muss.

Aus DE 25 46 571 ist eine heizbare Futterstelle für Wildtiere bekannt, bei der ein Brennkörper im Inneren eines Mantelrohrs angeordnet wird und das Futter im Mantelraum. Als Dach kann eine Schale zum Einsatz kommen, die im Abstand auf das Rohr gesetzt wird, so dass die Belüftung des Brennkörpers im inneren sichergestellt ist. Diese Vorrichtung ist offensichtlich für kleine Tiere, vor allem Vögel gedacht und eignet sich nicht für Weidetiere.

Aus der DE 199 34 577 ist eine Tränke für Großvieh bekannt, bei welcher durch eine Hebelvorrichtung die Tränke nach dem Saufen entleert wird. Diese Tränke benötigt aber einen Wasseranschluss und kann daher die obigen Probleme nicht lösen.

Es besteht daher Bedarf an einer verlässlichen und kostengünstigen Möglichkeit zur Wasserversorgung von Weidetieren.

Überraschend wurde nun gefunden, dass sich eine Tränke für Großvieh mit einer relativ geringen Wärmezufuhr wie etwa von einer oder einigen wenigen Kerzen, frostfrei halten lässt, wenn man die Wärmequelle in einem nahezu geschlossenen Raum unterhalb des Wasserbehälters anordnet.

Die obige Aufgabe wird daher gelöst durch eine Tränke für Weidetiere, umfassend eine äußere Umfassung mit einer verschließbaren Öffnung an einer Seite, einen Wasserbehälter, Haltemittel für den Wasserbehälter und eine brennstoffbetriebene Wärmequelle.

Die Größe der Tränke wird an die Weidetiere angepasst. Der Wasserbehälter wird in der Höhe so angeordnet, dass das Tier bequem saufen kann. Das Volumen des Wasserbehälters wird an den Bedarf angepasst. Es ist klar, dass für größere Tiere mehr Wasser benötigt wird und dass mehrere Tiere mehr Wasser benötigen als ein einziges. Das Volumen des Wasserbehälters beträgt daher zweckmäßig von 30 bis 120 l, besonders bevorzugt etwa 40 l für kleinere Tiere wie Schafe, Ziegen usw. und etwa 60 l für ein oder etwa 90 l für mehrere Pferde, Rinder und andere größere Tiere.

Die Höhenanpassung wird über die Umfassung und die Haltemittel erreicht. Es ist bevorzugt, wenn der Wasserbehälter auf Haltemittel aufgestellt oder in solche eingehängt wird, welche an der Umfassung angebracht sind. Beispielsweise kann die Umfassung innen einen umlaufenden Vorsprung oder mehrere, beispielsweise drei bis sechs, Vorsprünge aufweisen. Es können eine Strebe oder zwei sich kreuzende Streben vorhanden sein. Das Haltemittel kann auch an dem Wasserbehälter angebracht sein, beispielsweise kann dieser eine Krempe aufweisen, die auf dem oberen Rand der Umfassung aufliegt oder diese übergreift.

Der Wasserbehälter hat typischerweise einen runden Querschnitt, kann aber auch oval oder eckig sein. Seine Höhe muss geringer als die der Umfassung sein, da unterhalb die Wärmequelle angeordnet wird. Es hat sich bewährt, den Wasserbehälter mit abgerundetem Boden auszuführen, der Boden kann aber auch flach sein. Es ist praktisch, wenn der Behälter Griffe aufweist, an denen er leicht in die Umfassung eingestellt/eingehängt und wieder herausgenommen werden kann. Als Material bewährt sich besonders Metall, z.B. emaillierter und/oder feuerverzinkter Stahl. Das Material muss unbrennbar sein und sollte die Wärme gut leiten. Selbstverständlich kann der Behälter auch mehrteilig, z.B. aus unterschiedlichen Materialien gefertigt werden.

Die Umfassung muss so stabil sein, dass sie den Wasserbehälter zuverlässig trägt. Dies kann vorzugsweise dadurch erreicht werden, dass die Umfassung ein entsprechendes Gestänge umfasst, um welches eine feuerfeste Wandung angebracht wird. Ebenso können mit Sicken oder Streben verstärkte Gefäße Verwendung finden. Die Umfassung wird in Größe und Tragevermögen auf den Wasserbehälter abgestimmt. Vorzugsweise weist die Umfassung eine doppelte Wandung auf, wodurch die Wärmeabgabe über die Umfassung vermindert werden kann. Es ist weiter bevorzugt, wenn die Umfassung Mittel zur Verankerung der Tränke am Boden besitzt. Dazu eignen sich beispielsweise Vorsprünge am unteren Rand mit Ausnehmung, durch die Erdanker gesteckt werden können. Auch die Umfassung wird aus feuerfestem Material gefertigt, vorzugsweise Metall, besonders bevorzugt feuerverzinkter Stahl.

Die brennstoffbetriebene Wärmequelle wird durch die Öffnung in der Umfassung der Tränke in eine Position unterhalb des Wasserbehälters gestellt. Die Öffnung kann ein Schieber oder eine Tür sein oder eine abnehmbare Platte. Wichtig ist, dass die Öffnung ein bequemes Einsetzen der Wärmequelle erlaubt und verschlossen werden kann.

Als Wärmequelle eignen sich im Prinzip alle brennstoffbetriebenen Wärmequellen. Efindungsgemäß ist es wichtig, dass die Wärmequelle ohne Strom auskommt. Es ist vorteilhaft, wenn die Brenndauer möglichst lang ist, wobei jedoch aus dem Volumen des Wasserbehälters und der Höhe der Tränke Grenzen für die Abmessungen der Wärmequelle resultieren. Als Wärmequelle sind besonders vorteilhaft Kerzen, insbesondere sogenannte Grabkerzen, einsetzbar. Bevorzugt sind solche mit einer Brenndauer von einer Woche oder mehr. Für Wasserbehälter von 40 bis 90 l Volumen reicht bis zu -5°C eine Kerze gut aus, bei größeren Volumina oder bei besonders strengem Frost können aber auch bequem zwei (-5 bis -10°C), drei (-10 bis -20 °C), vier oder noch mehr Wärmequellen verwendet werden. Kerzen haben den Vorteil, dass sie beim Umfallen von selbst verlöschen. Andere Wärmequellen, wie Spiritusbrenner oder Gaskocher, sind von der Wärmelieferung her ebenso gut geeignet, würden jedoch bei einem Umkippen der Tränke nicht so leicht verlöschen wie Kerzen.

Die Erfindung soll anhand der Figuren erläutert werden, ohne jedoch auf die speziell beschriebenen Ausführungsformen beschränkt zu sein. Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

Es zeigt

Figur 1 einen Längsschnitt durch eine Tränke

Figur 2 ein Gestänge als Tragkonstruktion für die Umfassung

Figur 3 einen Querschnitt durch eine Tränke

Figur 4a und b zwei Varianten des Wasserbehälters.

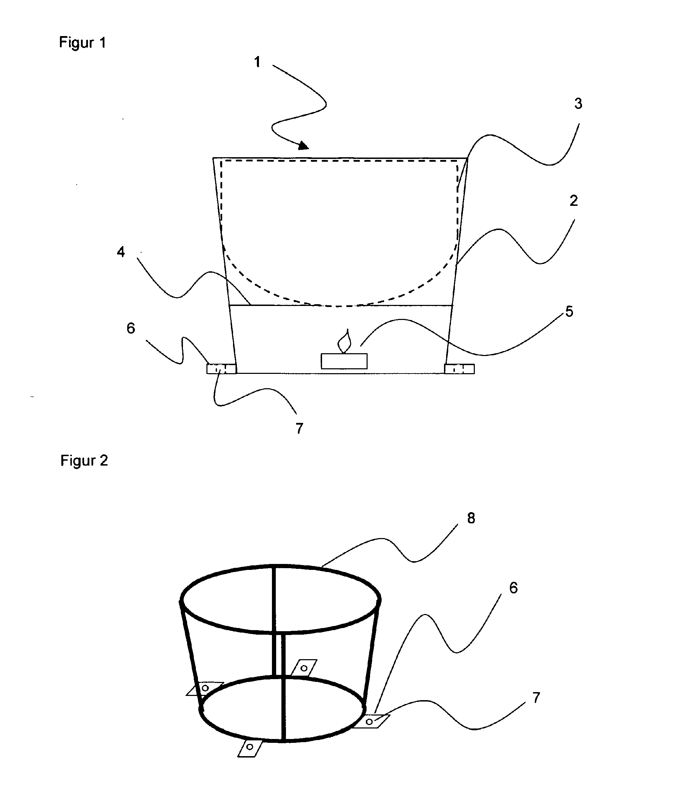

In Figur 1 zeigt einen Längsschnitt durch eine erfindungsgemäße, beheizte Tränke 1. In der Umfassung 2 wird ein Wasserbehälter 3 von einer Strebe als Haltemittel 4 getragen. Unterhalb des Wasserbehälters befindet sich die Wärmequelle 5, hier eine Kerze. Die Umfassung 2 kann einen Boden aufweisen, vorzugsweise ist sie aber oben und unten offen. In der Figur nicht gezeigt ist die Öffnung in der Umfassung 2, durch welche die Wärmequelle 5 eingesetzt und ausgewechselt werden kann. Am unteren Rand der Umfassung 2 befinden sich Füße 6 mit einem Loch 7, durch die hindurch z.B. mit einem Hering die Tränke am Boden befestigbar ist.

Figur 2 zeigt eine bevorzugte Ausgestaltung der Umfassung 2, bei der ein Gestänge 8 die Tragfunktion übernimmt. Die Füße 6, hier vier, es können aber auch zwei, drei, fünf oder sechs sein, sind direkt an dem Gestänge 8 angebracht. Es hat sich bewährt, das Gestänge 8 aus Stahlrohr zu fertigen, geeignet ist beispielsweise Rohr mit einem Durchmesser von 25 mm und einer Wandstärke von 2 mm. Der Durchmesser der Tränke 1 kann von 50 bis 80 cm, z.B. etwa 55 für einen 60 l - Wasserbehälter 3 oder etwa 65 cm für einen 90 l - Wasserbehälter 3 betragen. Die Höhe kann von 40 bis 80 cm, vorzugsweise etwa 50, etwa 55, etwa 60 oder etwa 65 cm betragen. Die Füße 6 können z.B. 6 cm lang, 4 cm breit und 4 mm hoch sein, wobei die Löcher 7 einen Durchmesser von 20 mm haben.

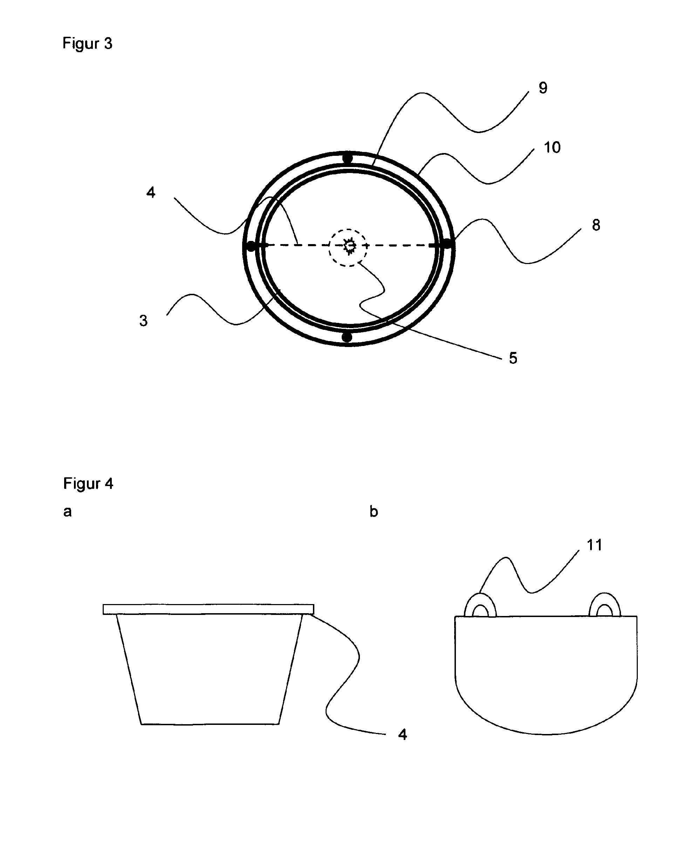

In Figur 3 ist ein Querschnitt durch eine Tränke 1 mit dem Gestänge 8 von Figur 2 zu sehen. Die Umfassung 2 beinhaltet neben dem Gestänge 8 eine innere Wandung 9 und eine äußere Wandung 10. Der Wasserbehälter 3 wird von einer Strebe 4 getragen, die ebenfalls fest mit dem Gestänge 8 verbunden ist. Die Wärmequelle 5 befindet sich unterhalb der Strebe 4 und des Wasserbehälters 3.

Figur 4 zeigt zwei Varianten für die Ausgestaltung des Wasserbehälters 3. In Figur 4a handelt es sich um ein kegelstumpfförmiges Gefäß mit einer vorspringenden Krempe 4 als Haltemittel. In Figur 4b ist ein kesselförmiges Gefäß mit einem gerundeten Boden gezeigt. Zur leichteren Handhabung sind Griffe 11 vorgesehen, hier zwei, es können aber auch ein, drei oder vier Griffe sein. Die Krempe als Haltemittel 4 kann mit einer Strebe kombiniert werden.

Die erfindungsgemäße Tränke eignet sich sehr gut zur Wasserversorgung von Weidetieren wie Pferden, Schafen, Ziegen, sowohl bei Einzeltieren als auch für mehrere Tiere. Sie liefert ohne großen technischen Aufwand zuverlässig Wasser auch in Frostperioden. Ein Austausch der Wärmequelle ist nur einmal pro Woche nötig. Die Tränke ist robust, einfach zu fertigen und damit auch kostengünstig. Neben Weiden sind auch Kaltställe ein bevorzugter Einsatzort.

### Bezuaszeichenliste

- 1: Tränke
- 2: Umfassung
- 3: Wasserbehälter
- 4: Haltemittel
- 5: Wärmequelle
- 6: Fuß
- 7: Loch
- 8: Gestänge
- 9: innere Wandung
- 10: äußere Wandung
- 11: Griff

## Patentansprüche

1. Tränke umfassend einen Wasserbehälter
**dadurch gekennzeichnet,**
**dass** der Wasserbehälter (3) durch Haltemittel (4) an einer Umfassung (2) festgelegt ist wobei unterhalb des Wasserbehälters (3) eine brennstoffbetriebene Wärmequelle (5) angeordnet ist und die Umfassung (2) zumindest eine im wesentlichen winddichte Wandung (8,9) mit einer verschließbaren Öffnung aufweist.

2. Tränke gemäß Anspruch 1, **dadurch gekennzeichnet, dass** die Wärmequelle (5) eine Kerze, insbesondere eine wenigstens sieben Tage brennende Grabkerze, ist.

3. Tränke gemäß Anspruch 1 oder 2, **dadurch gekennzeichnet, dass** eine oder mehrere Strebe(n), eine Krempe oder eine oder mehrere Strebe(n) und eine Krempe als Haltemittel (4) vorhanden sind.

4. Tränke gemäß mindestens einem der Ansprüche 1 bis 3, **dadurch gekennzeichnet, dass** der Wasserbehälter (3) einen, zwei oder mehr Griffe (11) aufweist.

5. Tränke gemäß mindestens einem der Ansprüche 1 bis 4, **dadurch gekennzeichnet, dass** die Umfassung (2) ein Gestänge (8) und eine Wandung (9, 10) oder zwei Wandungen (9, 10) umfasst.

6. Tränke gemäß mindestens einem der Ansprüche 1 bis 5, **dadurch gekennzeichnet, dass** sie Mittel (6, 7) zum Befestigen am Boden aufweist.

7. Tränke gemäß mindestens einem der Ansprüche 1 bis 6, **dadurch gekennzeichnet, dass** die Umfassung (2) aus Stahl, vorzugsweise aus feuerverzinktem Stahl, hergestellt ist.

8. Tränke gemäß mindestens einem der Ansprüche 1 bis 7, **dadurch gekennzeichnet, dass** der Wasserbehälter (3) aus Stahl, vorzugsweise aus feuerverzinktem und/oder emailliertem Stahl, hergestellt ist.
